# EUROPEAN PATENT SPECIFICATION

(11) **EP 2 725 243 B1**
(45) Date of publication and mention of the grant of the patent: **20.07.2016**
(21) Application number: 13188651.7
(22) Date of filing: 15.10.2013
(51) Int. Cl.: F16B 21/08, F16B 37/04

(54) **Plug for closing box-like bodies**
Stopfen zum Verschließen schachtelförmiger Körper
Bouchon destiné à fermer des corps de type boîte

(30) Priority: 25.10.2012 IT PD20120316
(43) Date of publication of application: 30.04.2014
(73) Proprietor: Dab Pumps S.p.A., 35035 Mestrino (Padova) (IT)
(72) Inventor: Tazioli, Stefano, 57016 Rosignano Marittimo (LI) (IT); Sinico, Francesco, 36075 Montecchio Maggiore (VI) (IT)
(74) Representative: Modiano, Micaela Nadia

(56) References cited:
- US-A- 4 300 865
- US-A- 5 759 004

## Description

The present invention relates to a plug for closing box-like bodies.

In order to close such bodies, intended particularly but not exclusively to contain electrical or hydraulic devices, exposed screws are often used which mutually associate two walls of the box-like body, at their edges, or fix them directly to internal components of the device.

Although very widespread, this method for closing the box-like body suffers the drawback of being scarcely practical, since it requires a significant number of fixing screws and therefore an unnecessary extension of the time to be dedicated to opening and closing the device for assembly or for any maintenance interventions.

Moreover, the presence of numerous screws on the exposed faces of the product often has a scarcely appreciated aesthetic impact.

Another drawback, in the case of box-like bodies that contain hydraulic devices, is that if such devices are designed with more than one intake or delivery duct, to be selected in use as needed, such box-like bodies can be provided with a plurality of openings, each one at a duct. It is advisable to keep these openings closed when the corresponding ducts are not used.

US 4 300 865 A discloses a blind clip fastener for use in work pieces and other parts made of fiberglass mat sheet molded compounds, such as automotive instrument panels, boat hulls and other such structural parts. The fastener is designed to seat in a round hole and, when seated, resists pulling out of the hole and resists turning when a second part is secured to the fastener by a screw turned down into an aperture in the fastener. The fastener comprises a simple unitary stamped metal part having a head portion formed with a screw-receiving aperture and a shank composed of a pair of opposed relatively narrow resilient legs extending perpendicularly from opposite marginal edges of the head portion. A pair of wings integral with the lower end of each leg extend along opposite side edges of that leg toward the head portion. The corresponding wings on each leg are bent toward one another about the longitudinal centerline of the fastener.

US 5 759 004 A discloses a one-piece mount formed from metal that provides for securing a bundle of wires by a metal cable tie to a mounting surface having a pair of spaced apart retaining legs that are inserted into and secured in a hole in a mounting surface, and including a strap accepting channel for engaging an independent cable tie strap at an opposite end.

The aim of the present invention is to provide a plug for closing a box-like body that allows to engage, in a practical and quick way, the walls to which it is applied.

Within this aim, an object of the invention is to provide a plug for closing box-like bodies that eliminates the problems of aesthetic impact that can be observed with fixing screws.

Another object of the invention is to propose a plug which, in addition to allowing easy and quick closure of the box-like body that encloses a hydraulic device, allows to open and close the intake and delivery ducts on the basis of the connections that it is necessary to provide with the hydraulic systems, without having to open the box-like body.

In accordance with the invention, there is provided a box-like body with a plug that closes the box-like body, as defined in the appended claims.

Further characteristics and advantages of the invention will become better apparent from the description of two preferred but not exclusive embodiments of the plug according to the invention, illustrated by way of nonlimiting example in the accompanying drawings, wherein:
Figure 1 is a perspective view of the plug according to the invention in its first embodiment;
Figure 2 is a sectional side view of the plug according to the invention, again in the first embodiment;
Figure 3 is a view of the insertion of the plug according to the invention, in its second embodiment, through the opening of a wall of a box-like body that contains a hydraulic device;
Figure 4 is a view of a portion of a device enclosed in a box-like body, the upper and lower walls of which, relative to the drawings that illustrate it, are each fixed by means of a plug according to the invention;
Figure 5 is an enlarged-scale sectional view of the plug according to the invention in its second embodiment, inserted to close a box-like body and with the closure applied to the mouth of a duct of the hydraulic device contained therein.

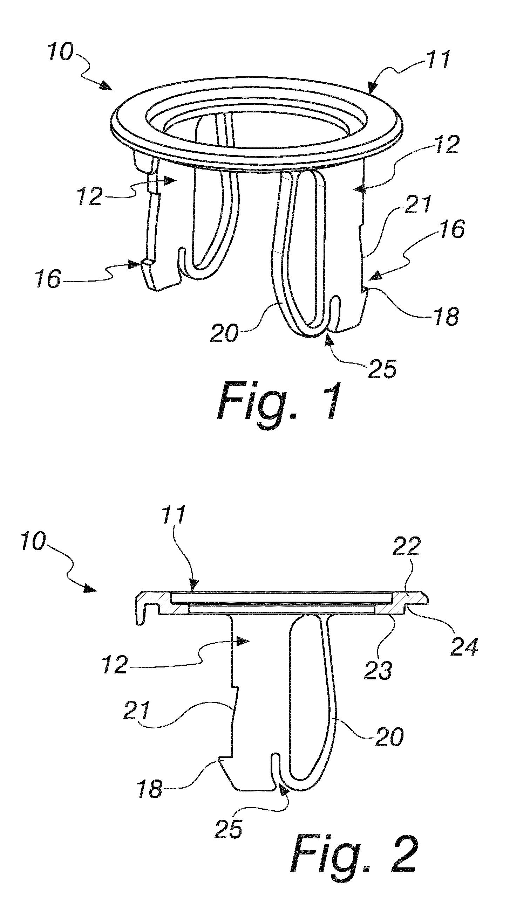

With reference to the figures, the plug according to the invention, generally designated in its first embodiment by the reference numeral 10, is preferably made of plastic material and, as shown clearly in particular in Figure 1, comprises a head 11 that has a circular perimeter and from which two substantially flat stems 12 protrude substantially tangentially. With these stems, the plug 10 enters the box-like body 13 through an opening 14. The opening 14 is conveniently also circular and provided in a wall 15 of the box-like body 13 to be closed.

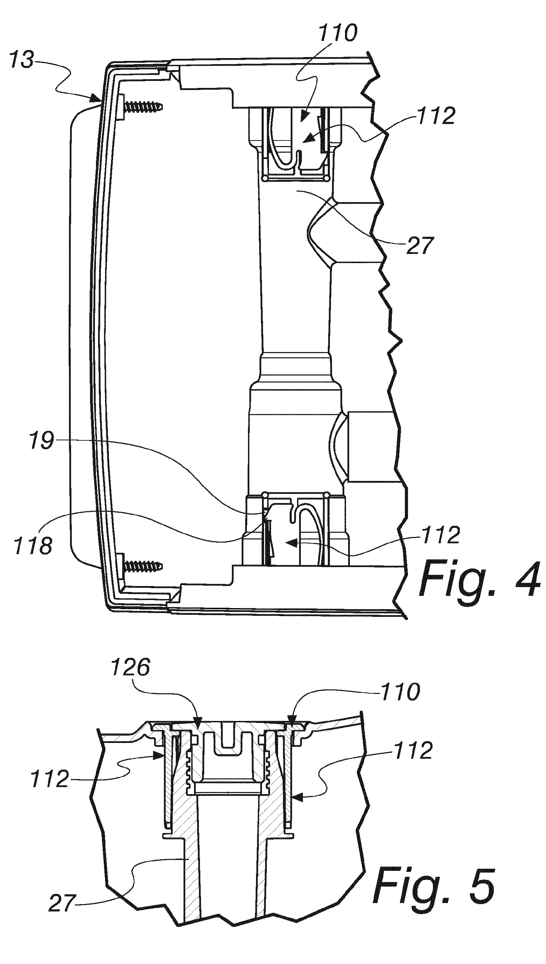

The head 11 engages the wall 15, resting with its rim against the rim of the opening 14 (as shown in Figure 5 for the second embodiment).

Each one of the two stems 12 has means 16 for snap-acting quick engagement with a portion 17 for accommodating the box-like body 13, which it enters during the insertion of the plug 10.

In particular, said snap-acting quick engagement means 16 comprise a tooth 18 for snap connection to the accommodation portion 17, which has a corresponding insertion seat 19 for the tooth 18. The coupling is clearly visible in Figure 4.

Each one of the two stems 12, being made of plastic material like the rest of the plug 10, is also advantageously provided with at least one elastically deformable portion 20, which is shaped substantially like a leaf spring that is provided in one piece with the rest of the stem 12 and is intended to be compressed during the application of the plug 10, or during the insertion of said stem 12 in the accommodation portion 17, until the tooth 18 enters the insertion seat 19.

As clearly visible from the perspective views, the two stems 12 are, as mentioned, substantially flat and have at one end the elastically deformable portion 20 and, at the opposite end, the tooth 18.

The elastically deformable portion 20 is extended substantially along the entire length of the stem 12 and the part that is subject to deformation is the one that is slightly curved outwardly.

The tooth 18 protrudes proximate to the end of the stem 12 and is defined by a contoured recess 21 for the disengagement of the tooth 18 by way of the lateral insertion of tools such as a flat screwdriver and the like.

The insertion seat 19 must be conveniently open on one side to allow the exit of the tooth 18 following a rotation imparted by the screwdriver.

The two stems 12 face each other and are diametrically mutually opposite with the tooth 18 of one of them substantially opposite the elastically deformable portion 20 of the other.

As mentioned, the head 11 has a circular rim and, more particularly, has a substantially annular shape with a larger annular portion 22 and a smaller annular portion 23, which creates with the preceding portion a resting step 24 for the head 11, which associates with abutment with the seat of the opening 14 (the step 24 is shown in Figure 2). The stems 12 protrude from diametrically opposite regions of the smaller annular portion 23.

The two stems 12 can be inserted in a single accommodation portion 17 that has two corresponding insertion seats 19 for the two teeth 18 or can be inserted each in an accommodation portion 17, as shown for the second embodiment.

Each stem 12 also advantageously has a recess 25, which, by protruding from its end inwardly, on the rear of the elastically deformable portion 20, increases the limit of elastic deformation of the stem 12.

As an alternative, in another embodiment that is not described here, the plug can have a disk-like head in order to close completely the opening 14.

In its second embodiment, the plug is generally designated by the reference numeral 110.

Like the preceding one, it comprises a head 111 having a circular perimeter from which two stems 112 protrude substantially tangentially; by means of said stems, the plug 110 enters the box-like body 13 in the manner already described.

In this embodiment also, each stem 112 has means 116 for snap-acting quick engagement with an accommodation portion 17 of the box-like body 13, which comprise a tooth 118 for snap connection to the accommodation portion 17, which has a corresponding insertion seat 19 for the tooth 118. In particular, the tooth 118, as in the first embodiment, protrudes at the end of said stem 112 and is defined by a contoured recess 121 for the release of the tooth 118 from the insertion seat 19.

Again like for the plug 10, each stem 112 is substantially flat and is provided with an elastically deformable portion 120 on one of its sides, while on the opposite side there is the tooth 118. In particular, the elastically deformable portion 120 is shaped like a leaf spring that is provided in one piece with the rest of the stem 112 and is intended to be compressed when the stem 112 is inserted in the accommodation portion 17.

The two stems 112 face each other and are diametrically mutually opposite, with the tooth 118 of one of them substantially opposite the elastically deformable portion 120 of the other.

As occurs for the plug 10, the head 111 has a substantially annular shape, with a larger annular portion 122 and a smaller annular portion 123 which creates with the preceding one a resting step 124 for the head 111, which is associated with abutment with the seat of the opening 14.

The two stems 112 protrude from diametrically opposite regions of the smaller annular portion 123.

Moreover, the stem 112 has a recess 125 which, by extending from its end inwardly, on the rear of the elastically deformable portion 120, increases the limit of elastic deformation of the stem 112.

Differently from the preceding one, in this embodiment the plug 110 is also provided with a circular closure 126 whose dimensions are compatible with the part of the head 111 that is surrounded by the annular portions 122 and 123, in which the closure is inserted.

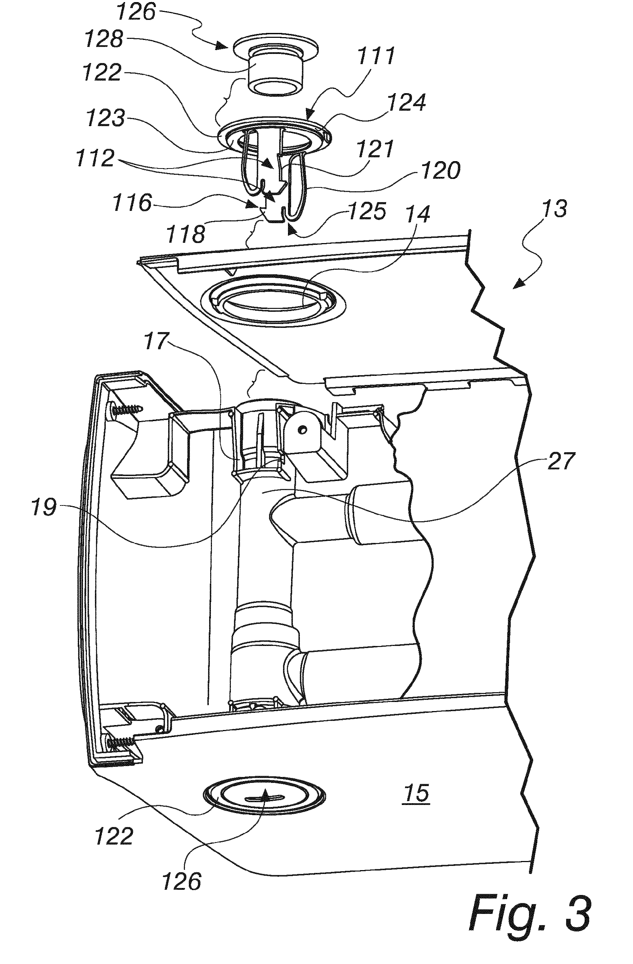

The plug 110 can be used advantageously to close a box-like body 13 that contains a hydraulic pumping device, as shown in Figures 3 to 5, and can be inserted with the two stems 112 around a delivery or intake duct 27 of the device. The two stems 112 each also enter a corresponding accommodation portion 17 on opposite sides of the duct 27. The head 111 can be closed, as shown in the exploded view of Figure 3 and in Figure 5, by means of the closure 126, to be inserted with its stem 128 in the mouth of the duct 27.

However, the closure 126 can also be used as esthetic covering of the opening 14.

Use of the plug according to the invention is as follows and is described only for the second embodiment, since it is similar for the first one except in the insertion of the closure 126.

The plug 110, described here in the application to a box-like body 13 that contains a hydraulic pumping device, is applied on opposite walls 15 of the box-like body 13, at least one for each wall, inserting it with the stems 112 through the openings 14 and then in the accommodation portions 17 on opposite sides of the duct 27. During the insertion of each stem 112 in the accommodation portion 17, the elastically deformable portion 120 is compressed, reducing temporarily the overall width of the stem 112, until the tooth 118 enters with a snap action the insertion seat 19. At this point the elastically deformable portion 120 returns completely or partially to its original shape, extending against the wall of the accommodation portion 17.

The duct 27 is then closed, inserting the closure 126 with its stem 128 in the mouth of the duct 27, optionally screwing it in if the parts are threaded. In this manner it is possible to keep closed the connections of the device that are not used and optionally also open them quickly and easily when necessary without opening the box-like body and removing the entire plug 110 but only the closure 126.

Other two opposite walls of the box-like body 13 can be closed traditionally around the device by way of mechanical fixing means such as screws.

If it is necessary to open the box-like body 13, it is sufficient to remove the plug 126 and one of the other two opposite walls, from the side of which it is easy to access the plug 110 by means of a screwdriver to be inserted in the recess 121, in order to impart a rotation to the plug 110 (also causing a compression of the elastically deformable portion 120), until the tooth 118 exits from the insertion seat 19.

In practice it has been found that the invention achieves the intended aim and objects, by providing a plug which allows, in the closure of a box-like body, to engage in a practical and quick way the walls to which it is applied, without using screws and thus reducing the total number thereof to be used to close the entire box-like body.

Another advantage of the invention is that it obtains the engagement of some parts of the box-like body with a better aesthetic impact than that obtainable by using fixing screws.

A further advantage of the invention is that it can be used, particularly in its second embodiment, not only for the quick engagement and disengagement of the walls of the box-like body but also to ensure easy and quick closure and opening of ducts of a hydraulic device, in order to modify the delivery and intake configurations without having to open the box-like body.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2012A000316 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A box-like body (13) with a plug (10, 110) that closes the box-like body (13), the plug comprising a head (11, 111) that has a circular perimeter and from which at least two substantially flat stems (12, 112) protrude substantially tangentially, said plug (10, 110) entering, by means of said stems, said box-like body (13) through an opening (14) provided in a wall (15) of said box-like body (13), said head (11, 111) engaging, by means of its rim, the rim of said opening (14) and each stem (12, 112) having snap-acting means (16, 116) that engage by quick engagement with a portion (17) that accommodates said box-like body (13) and each stem (12, 112) being provided with at least one elastically deformable portion (20, 120) which has substantially the shape of a leaf spring provided in one piece with the rest of the stem (12, 112) and that is compressed during insertion, said snap-acting quick engagement means (16, 116) comprising a tooth (18, 118) that is snap connected to said accommodation portion (17), which has a corresponding insertion seat (19) for said tooth (18, 118), said substantially flat stem (12, 112) having, on one side, said elastically deformable portion (20, 120) and, on the opposite side, said tooth (18, 118).

2. The box-like body with the plug according to claim 1, **characterized in that** said two stems (12, 112) face each other and are diametrically mutually opposite, the tooth (18, 118) of one of them being substantially opposite with respect to the elastically deformable portion (20, 120) of the other one of said stems (12, 112).

3. The box-like body with the plug according to 2, **characterized in that** said head (11, 111) has a substantially annular shape, with a larger annular portion (22, 122) and a smaller annular portion (23, 123) that forms, with the preceding one, a resting step (24, 124) for said head (11, 111), which is associated with abutment with the seat of said opening (14), said stems (12, 112) protruding from diametrically opposite regions of said smaller annular portion (23, 123).

4. The box-like body with the plug according to claim 1, **characterized in that** said stem (12, 112) has a recess (25, 125) which, by protruding from its end inwardly, on the rear of said elastically deformable portion (20, 120), increases the limit of elastic deformation of said stem (12, 112).

5. The box-like body with the plug according to claim 1, **characterized in that** said tooth (18, 118) protrudes proximate to the end of said stem (12, 112) and is defined by a contoured recess (21, 121) for the release of the tooth (18, 118) by means of the lateral insertion of tools such as a flat screwdriver and the like.

6. The box-like body with the plug according to claim 3, **characterized in that** it is provided with a circular closure (126) having dimensions that are compatible with the part of said head (111) that is surrounded by said smaller annular portion (123) and by said larger annular portion (122), and in which the closure is inserted.

7. The box-like body with the plug (110) according to claim 6, **characterized in that** said box-like body (13) contains a hydraulic pumping device, said plug (110) being inserted with the stems (112) around a delivery or suction duct (27) of said hydraulic pumping device, and said head (111) being closed by means of said closure (126), inserted with one of its stems (128) in the mouth of said duct (27).

## Patentansprüche

1. Ein schachtelförmiger Körper (13) mit einem Stopfen (10, 110), der den schachtelförmigen Körper (13) verschließt, wobei der Stopfen einen Kopf (11, 111) umfasst, der einen kreisförmigen Umfang hat und aus dem mindestens zwei im Wesentlichen flache Schenkel (12, 112) im Wesentlichen tangential herausragen, wobei der Stopfen (10, 110) durch die Schenkel in den schachtelförmigen Körper (13) durch eine Öffnung (14) eindringt, die in einer Wand (15) des schachtelförmigen Körpers (13) angebracht ist, wobei der Kopf (11, 111) mit seinem Rand in den Rand der Öffnung (14) eingreift und jeder Schenkel (12, 112) Schnappverbindungsmittel (16, 116) hat, die durch Schnelleingriff in einen Abschnitt (17) eingreifen, der den schachtelförmigen Körper (13) aufnimmt, und wobei jeder Schenkel (12, 112) mit mindestens einem elastisch verformbaren Abschnitt (20, 120) ausgestattet ist, der im Wesentlichen die Form einer Blattfeder hat, einteilig mit dem Rest des Schenkels (12, 112) bereitgestellt, und der während des Einführens zusammengedrückt ist, wobei die Schnapp-Schnellverbindungsmittel (16, 116) einen Zahn (18, 118) umfassen, der in einer Schnappverbindung mit dem Aufnahmeabschnitt (17) verbunden ist, welcher einen entsprechenden Einführungssitz (19) für den Zahn (18, 118) hat, wobei der im Wesentlichen flache Schenkel (12, 112) auf einer Seite den elastisch verformbaren Abschnitt (20, 120) und auf der gegenüberliegenden Seite den Zahn (18, 118) hat.

2. Der schachteiförmige Körper mit dem Stopfen gemäß Anspruch 1, **dadurch gekennzeichnet, dass** die zwei Schenkel (12, 112) einander zugewandt sind und einander diametral gegenüberliegen, wobei der Zahn (18, 118) des einen im Wesentlichen dem elastisch verformbaren Abschnitt (20, 120) des anderen der Schenkel (12, 112) gegenüberliegt.

3. Der schachtelförmige Körper mit dem Stopfen gemäß Anspruch 2, **dadurch gekennzeichnet, dass** der Kopf (11 111) im Wesentlichen eine Ringform hat, mit einem größeren ringförmigen Abschnitt (22, 122) und einem kleineren ringförmigen Abschnitt (23, 123), welcher mit dem zuvor genannten eine Aufliegestufe (24, 124) für den Kopf (11, 111) bildet, der anliegend mit dem Sitz der Öffnung (14) verbunden ist, wobei die Schenkel (12, 112) aus diametral gegenüberliegenden Bereichen des kleineren ringförmigen Abschnitts (23, 123) herausragen.

4. Der schachteiförmige Körper mit dem Stopfen gemäß Anspruch 1, **dadurch gekennzeichnet, dass** der Schenkel (12, 112) eine Einkerbung (25, 125) hat, die, indem sie am hinteren Ende des elastisch verformbaren Abschnitts (20, 120) von seinem Ende einwärts ragt, die Grenze elastischer Verformung des Schenkels (12, 112) vergrößert.

5. Der schachteiförmige Körper mit dem Stopfen gemäß Anspruch 1, **dadurch gekennzeichnet, dass** der Zahn (18, 118) nahe dem Ende des Schenkels (12, 112) herausragt und durch eine konturierte Kerbe (21, 121) für die Lösung des Zahns (18, 118) mit Hilfe des seitlichen Einführens von Werkzeugen, wie zum Beispiel einem flachen Schraubendreher und dergleichen, bestimmt ist.

6. Der schachteiförmige Körper mit dem Stopfen gemäß Anspruch 3, **dadurch gekennzeichnet, dass** er mit einem kreisförmigen Verschluss (126) versehen ist, der Maße hat, welche kompatibel mit dem Teil des Kopfes (111) sind, der von dem kleineren ringförmigen Abschnitt (123) und von dem größeren ringförmigen Abschnitt (122) umgeben ist und in den der Verschluss eingesetzt wird.

7. Der schachteiförmige Körper mit dem Stopfen (110) gemäß Anspruch 6, **dadurch gekennzeichnet, dass** der schachteiförmige Körper (13) eine hydraulische Pumpvorrichtung enthält, wobei der Stopfen (110) mit den Schenkeln (112) um einen Abgabe- oder Ansaugkanal (27) der hydraulischen Pumpvorrichtung herum eingeführt wird und der Kopf (111) mit Hilfe des Verschlusses (126) verschlossen wird, eingeführt mit einem seiner Schenkel (128) in die Öffnung des Kanals (27).

## Revendications

1. Corps en forme de boîte (13) avec un bouchon (10, 110) qui ferme le corps en forme de boîte (13), le bouchon comprenant une tête (11, 111) qui a un périmètre circulaire et à partir de laquelle au moins deux tiges sensiblement plates (12, 112) font saillie de manière sensiblement tangentielle, ledit bouchon (10, 110) entrant, au moyen desdites tiges, dans ledit corps en forme de boîte (13) par une ouverture (14) prévue dans une paroi (15) dudit corps en forme de boîte (13), ladite tête (11, 111) mettant en prise, au moyen de son rebord, le rebord de ladite ouverture (14) et chaque tige (12, 112) ayant des moyens d'encliquetage (16, 116) qui se mettent en prise, par mise en prise rapide, avec une partie (17) qui loge ledit corps en forme de boîte (13) et chaque tige (12, 112) étant prévue avec au moins une partie élastiquement déformable (20, 120) qui a sensiblement la forme d'un ressort à lames prévu d'un seul tenant avec le reste de la tige (12, 112) et qui est comprimé pendant l'insertion, lesdits moyens de mise en prise rapide à encliquetage (16, 116) comprenant une dent (18, 118) qui est raccordée par encliquetage à ladite partie de logement (17), qui a un siège d'insertion (19) correspondant pour ladite dent (18, 118), ladite tige sensiblement plate (12, 112) ayant, sur un côté, ladite partie élastiquement déformable (20, 120) et du côté opposé, ladite dent (18, 118).

2. Corps en forme de boîte avec le bouchon selon la revendication 1, **caractérisé en ce que** lesdites deux tiges (12, 112) se font face et sont mutuellement diamétralement opposées, la dent (18, 118) de l'une d'entre elles étant sensiblement opposée par rapport à la partie élastiquement déformable (20, 120) de l'autre desdites tiges (12, 112).

3. Corps en forme de boîte avec le bouchon selon la revendication 2, **caractérisé en ce que** ladite tête (11, 111) a une forme sensiblement annulaire, avec une plus grande partie annulaire (22, 122) et une plus petite partie annulaire (23, 123) qui forme, avec la précédente, un gradin d'appui (24, 124) pour ladite tête (11, 111), qui est associé avec la butée du siège de ladite ouverture (14), lesdites tiges (12, 112) faisant saillie des régions diamétralement opposées de ladite plus petite partie annulaire (23, 123).

4. Corps en forme de boîte avec le bouchon selon la revendication 1, **caractérisé en ce que** ladite tige (12, 112) a un évidement (25, 125) qui, en faisant saillie à partir de son extrémité vers l'intérieur, à l'arrière de ladite partie élastiquement déformable (20, 120), augmente la limite de la déformation élastique de ladite tige (12, 112).

5. Corps en forme de boîte avec le bouchon selon la revendication 1, **caractérisé en ce que** ladite dent (18, 118) fait saillie à proximité de l'extrémité de ladite tige (12, 112) et est définie par un évidement profilé (21, 121) pour la libération de la dent (18, 118) au moyen de l'insertion latérale d'outils tel qu'un tournevis plat et similaire.

6. Corps en forme de boîte avec le bouchon selon la revendication 3, **caractérisé en ce qu'**il est prévu avec une fermeture circulaire (126) ayant des dimensions qui sont compatibles avec la partie de ladite tête (111) qui est entourée par ladite plus petite partie annulaire (123) et par ladite plus grande partie annulaire (122), et dans laquelle la fermeture est insérée.

7. Corps en forme de boîte avec le bouchon (110) selon la revendication 6, **caractérisé en ce que** ledit corps en forme de boîte (13) contient un dispositif de pompage hydraulique, ledit bouchon (110) étant inséré avec lesdites tiges (112) autour d'un conduit de distribution ou d'aspiration (27) dudit dispositif de pompage hydraulique, et ladite tête (111) étant fermée au moyen de ladite fermeture (126), insérée avec l'une de ses tiges (128) dans la bouche dudit conduit (27).
